# EUROPEAN PATENT APPLICATION

(11) **EP 4 279 144 A1**
(43) Date of publication of application: **22.11.2023**
(21) Application number: 22174270.3
(22) Date of filing: 19.05.2022
(51) Int. Cl.: A62B 7/14, A62B 9/00, A62B 21/00, A62B 27/00

(54) **AIRCRAFT EMERGENCY OXYGEN SUPPLY DEVICE, AIRCRAFT COMPRISING SUCH AN EMERGENCY OXYGEN SUPPLY DEVICE, AND METHOD OF OPERATING AN AIRCRAFT EMERGENCY OXYGEN SUPPLY DEVICE**

(71) Applicant: B/E Aerospace Systems GmbH, 23560 Lübeck (DE)
(72) Inventor: Degenhardt, Detlev, 23617 Stockelsdorf (DE)
(74) Representative: Schmitt-Nilson Schraud Waibel Wohlfrom Patentanwälte Partnerschaft mbB

(57) **Abstract**

An aircraft emergency oxygen supply device (2) comprises an oxygen source (20) for supplying oxygen gas; a backup electric power supply system (28), comprising at least one electric power storage device (29); and a controller (26) for controlling the operation of the aircraft emergency oxygen supply device (2). The aircraft emergency oxygen supply device (2) is electrically connectable to an aircraft electric power supply system (34) for being supplied with electric power provided by the aircraft electric power supply system (34); the at least one electric power storage device (29) is chargeable by electric power provided by the aircraft electric power supply system (34); and the aircraft emergency oxygen supply device (2) is operational with electric power provided by the backup electric power supply system (28).

## Description

The present invention is in the field of aircraft equipment. The present invention is in particular in the field of emergency equipment for aircraft. Further in particular, the present invention is in the field of aircraft emergency oxygen supply devices in a passenger aircraft, and aircraft comprising such emergency oxygen supply devices.

Modern aircraft comprising a pressurized cabin are equipped with emergency oxygen masks, which are deployed for the passengers in case of a loss of cabin pressure during flight. The passenger oxygen masks are part of self-sustained aircraft emergency oxygen supply devices, including oxygen sources that provide oxygen gas to the passengers, in case cabin pressure is lost.

In modern aircraft, emergency oxygen masks are often stored in passenger service units, in particular overhead passenger service units, from where they are deployed / dropped in case of a loss of cabin pressure. The passenger service units are commonly coupled to an electric power supply system of the aircraft. With power from the electric power supply system of the aircraft, the passenger service units commonly operate readings lights, passenger signs, cabin attendant call buttons, etc. The aircraft emergency oxygen systems of modern aircraft are commonly supplied with electric power from a dedicated emergency power supply system, which is a power network separate from above mentioned electric power supply system of the aircraft and which has its own wiring throughout the aircraft. The dedicated emergency power supply system may also be referred to as an emergency aircraft electric power supply system.

The electric power supply system of the aircraft and the dedicated emergency power supply system are implemented via two independent harnesses that need to be installed in the aircraft and that extend through the aircraft. Installing two independent harnesses extending through the aircraft is cumbersome and expensive.

It would therefore be beneficial to provide aircraft emergency oxygen supply devices, which may be reliably operated, even in case of failure of the electric power supply system of the aircraft, and which are less cumbersome to implement.

Exemplary embodiments of the invention include an aircraft emergency oxygen supply device that comprises an oxygen source for supplying oxygen gas; a backup electric power supply system, which includes at least one electric power storage device; and a controller for controlling the operation of the aircraft emergency oxygen supply device.

The aircraft emergency oxygen supply device may further comprise at least one oxygen mask, and the oxygen source may be fluidly connectable to the at least one oxygen mask for supplying the oxygen gas, supplied by the oxygen source, to at least one passenger. An aircraft emergency oxygen supply device according to an exemplary embodiment of the invention may be installed next to a passenger seat, for example above a row of passenger seats, and the at least one oxygen mask will be deployed in front of a passenger / a group of passengers, sitting on the at least one passenger seat, when the aircraft emergency oxygen supply device is activated.

The aircraft emergency oxygen supply device is electrically connectable to an aircraft electric power supply system for being supplied with electric power, provided by the aircraft electric power supply system. The at least one electric power storage device is chargeable by electric power provided by the aircraft electric power supply system, and the aircraft emergency oxygen supply device is operational with electric power provided by the aircraft electric power supply system and/or with electric power provided by the backup electric power supply system.

Thus, when the aircraft electric power supply system is operating properly, such that it provides electric power for operating the aircraft emergency oxygen supply device, the aircraft emergency oxygen supply device may be operated with electric power provided by the aircraft emergency oxygen supply device.

When there is a failure of the regular / standard aircraft electric power supply system, such that it is not able to provide the electric power, which is needed for operating the aircraft emergency oxygen supply device, the aircraft emergency oxygen supply device may be operated with electric power provided by the backup electric power supply system.

As a result, the operability of the aircraft emergency oxygen supply device may be ensured in case of failure of the regular / standard aircraft electric power supply system, without connecting the aircraft emergency oxygen supply device to an additional harness of an emergency aircraft electric power supply system.

In consequence, the need for installing an additional harness, extending through the aircraft for connecting the aircraft emergency oxygen supply device to an emergency aircraft electric power supply system, may be eliminated, so that the costs for installing such an additional harness may be saved.

When the aircraft electric power supply system is operating properly, the at least one electric power storage device of the backup electric power supply system may be charged directly with electric power supplied by the aircraft electric power supply system. In other words, there is no need for providing an additional energy harvesting device for supplying the electric energy, used for charging the at least one electric power storage device. As a result, the complexity and costs for an aircraft emergency oxygen supply device according to exemplary embodiments of the invention may be further reduced, as compared to solutions including an energy harvesting device.

In an embodiment, the aircraft emergency oxygen supply device is operational with electric DC power having a voltage in the range of between 15 V and 35 V, in particular a voltage in the range of between 20 and 30 V, more particularly a voltage in the range of between 27.5 and 28.5 V. This may allow for electrically coupling the aircraft emergency oxygen supply device to the regular electric power supply system of an aircraft, without providing additional electric circuitry.

In an embodiment, the backup electric power supply system is configured to supply electric DC power, in particular DC power having a voltage in the range of between 15 V and 35 V, in particular a voltage in the range of between 20 and 30 V, more particularly a voltage in the range of between 27.5 and 28.5 V. This may allow for an easy and direct substitution of the electric power, which is supplied by the aircraft electric power supply system during normal operation, by electric power supplied by the backup electric power supply system, in case of a failure of the aircraft electric power supply system. In such a configuration, there may be no need for converting the voltage of the electric power, supplied by the backup electric power supply system, before it is supplied to the aircraft emergency oxygen supply device.

In an embodiment, the at least one electric power storage device comprises at least one rechargeable battery or at least one capacitor or at least one supercapacitor or any combination thereof.

In an embodiment, the aircraft emergency oxygen supply device has a power supply input terminal for receiving the electric power from the aircraft electric power supply system. The power supply input terminal may be connected to the electric power supply system by electric power supply lines, when the aircraft emergency oxygen supply device is installed within the aircraft.

In an embodiment, the aircraft emergency oxygen supply device has at least one activation input terminal for receiving an activation signal activating the aircraft emergency oxygen supply device.

In an embodiment, the at least one activation input terminal may be integrated with the power supply input terminal forming a combined input terminal, which is configured for receiving electric power for operating the aircraft emergency oxygen supply device and for receiving activation signals for activating the aircraft emergency oxygen supply device.

In an alternative configuration, the at least one activation input terminal may be provided separately and independently from the power supply input terminal. Such a configuration may allow for supplying the activation signal independently of the electric power. It may in particular allow for providing activation signals having different voltages than the electric power, which is supplied for operating the aircraft emergency oxygen supply device. Supplying the activation signal separately and independently from the electric power may allow for using more simple circuitry within the aircraft emergency oxygen supply device, as there is no need for separating the activation signal from the electric power.

In an embodiment, the at least one activation input terminal may be configured for receiving the activation signal via a wired connection, in particular via a harness, which is electrically coupled to the at least one activation input terminal. Such an embodiment may be easily installed in existing aircraft designs, in which a harness is used for distribution of the activation signals.

In an embodiment, the at least one activation input terminal may be configured for receiving the activation signal via a wireless connection, in particular via a connection using WLAN, Bluetooth^{®}, infrared data transmission, or a similar wireless data transfer technology. In a configuration, in which the activation signal is transmitted via a wireless connection, there is no need for installing an additional harness for transmitting the activation signal.

In an embodiment, the aircraft emergency oxygen supply device comprises an electric charge sensor, which is configured for determining a current charging state of the at least one electric power storage device. Such an electric charge sensor may allow for monitoring the charging state of the at least one electric power storage device and for detecting a low charging state of the at least one electric power storage device.

In an embodiment, the aircraft emergency oxygen supply device further comprises a charge indicator device, which may be coupled to the electric charge sensor and which may be configured for indicating the current charging state of the at least one electric power storage device. Such a charge indicator device may allow for visually monitoring the charging state of the at least one electric power storage device and for detecting a low charging state of the at least one electric power storage device.

The charge indicator device may, for example, include a plurality of LEDs which may be activated and deactivated depending on the current charging state of the at least one electric power storage device. The optical charge indicator device also may comprise a single LED, which may be configured for emitting light of different colors as a function of the current charging state of the at least one electric power storage device. Other types of optical charge indicator devices may be possible as well.

In an embodiment, the backup electric power supply system is configured for issuing a status signal, in particular an electric, visual and/or acoustic status signal, which may be indicative of the current charging state of the at least one electric power storage device. The status signals may be forwarded to an aircraft control system, which may include a board computer, which is consulted by the pilots / crew before and/or duing flight, or a data logging system for logging operational parameters of the aircraft or similar device.

In an embodiment, the backup electric power supply system, in particular the controller, is configured for issuing an alarm signal, in particular an electric, visual and/ or acoustic alarm signal, in case the detected charging state of the at least one electric power storage device is below a predefined threshold.

In an embodiment, the oxygen source comprises a chemical oxygen generator with a mechanical activator. The mechanical activator may be configured for starting a chemical reaction within the chemical oxygen generator after it has been mechanically triggered. The mechanical trigger may take place via a mechanical link, such as a lanyard. The chemical reaction produces oxygen, which is supplied to at least one passenger via at least one oxygen mask. The at least one electric power storage device may have an electric storage capacity sufficient to effect deployment of at least one oxygen mask. In particular, in an aircraft emergency oxygen supply device comprising a chemical oxygen generator and a mechanical activator, electric power may only be needed for deploying the passenger oxygen mask(s), when the aircraft emergency oxygen supply device is activated, but no electric energy is needed for starting and operating the oxygen generator. The passenger oxygen mask(s) may for example be deployed by unlocking and/or opening a movable door of a compartment, in which the passenger oxygen mask(s) is/are stored.

In an embodiment, the oxygen source comprises a chemical oxygen generator with an electric activator, in particular a pyroelectric activator. The electric activator may be configured for starting a chemical reaction within the chemical oxygen generator after it has been electrically triggered. The electric activator may be activated by closing an electric switch for applying an electric voltage to the electric activator. The electric trigger may take place in response to a trigger sensor signal and/or in response to a trigger command, such as a trigger command from the cockpit, and/or in response to the operation of a mechanical link, such as a lanyard, whose operation is translated into an electric trigger. The chemical reaction produces oxygen, which is supplied to at least one passenger via at least one oxygen mask. The at least one electric power storage device may have an electric storage capacity sufficient to effect deployment of at least one oxygen mask and to operate the electric activator. In particular, in an aircraft emergency oxygen supply device comprising a chemical oxygen generator with an electric activator, electric power may be needed for deploying the passenger oxygen mask(s) and for operating the electric activator. No electric energy may be needed for operating the oxygen generator, after the chemical reaction, which produces the oxygen, has been started.

In an embodiment, the oxygen source comprises an oxygen gas storage device, in particular an oxygen gas bottle / an oxygen gas cylinder, in which a predefined amount of oxygen gas, in particular a predefined amount of gas having a predefined percentage of oxygen, is stored. The oxygen source may further comprise an electric activator, in particular a pyroelectric activator, for starting the supply of oxygen gas from the oxygen gas storage device. It is also possible that the oxygen source comprises a mechanical activator. The oxygen source may further comprise a gas supply controller for controlling the supply of oxygen gas from the oxygen storage device to at least one oxygen mask. The at least one electric power storage device may have an electric storage capacity sufficient to effect deployment of the at least one oxygen mask, to operate the electric activator, and to operate the gas supply controller. In particular, electric power may be needed even after the oxygen source has been activated, in order to allow operating the gas supply controller for controlling the supply of the gas, comprising oxygen, from the oxygen storage device to the passenger oxygen mask(s).

The electric capacity of the backup electric power supply system, in particular the electric capacity of the at least one electric power storage device, depends on the amount of electric energy which is needed for reliably operating the aircraft emergency oxygen supply device in case of a malfunction or a breakdown of the aircraft electric power supply system.

As mentioned before, electric power is at least needed for deploying the oxygen masks, e.g. by unlocking and/or opening the movable door of the compartment in which the oxygen masks are stored. In consequence, the backup electric power supply system is configured such that it is capable to provide at least sufficient electric power for deploying the oxygen masks to the passengers.

In case the aircraft emergency oxygen supply device is equipped with a (pyro)electric activator for starting the production and/or the supply of oxygen comprising gas, the backup electric power supply system is configured such that it is additionally capable to provide sufficient electric power for reliably operating the electric activator in order to reliably start the production and/or the supply of oxygen comprising gas, which is to be delivered to the oxygen masks.

In case the aircraft emergency oxygen supply device further comprises a gas supply controller for controlling the supply of gas to the oxygen masks, the backup electric power supply system is configured such that it is additionally capable to provide sufficient electric power for reliably operating the gas supply controller.

In such a configuration, the backup electric power supply system is configured such that it is capable to provide sufficient electric power for reliably operating the aircraft emergency oxygen supply device not only over a relatively short starting phase for opening the movable door of the aircraft emergency oxygen supply device and triggering the supply of gas to the oxygen masks. Instead, the backup electric power supply system is configured such that it is capable to supply electric power over the full operating time of the aircraft emergency oxygen supply device, i.e. over the whole period of time in which the oxygen source supplies oxygen gas to the oxygen masks.

In each of the above discussed implementations of the oxygen source, i.e. in each of the above discussed implementations of the chemical oxygen generator and of the oxygen gas storage device, a gas supply controller for controlling the supply of gas to the oxygen masks may be provided. In particular, the gas supply controller may be configured to control the provision of an oxygen pulse to the passenger for every breath of the passenger over the full operating time of the aircraft emergency oxygen supply device. The capacity of the backup electric power supply system may be dimensioned accordingly.

The aircraft may be configured such that an alarm signal, provided by the backup electric power supply system, prevents the aircraft from taking-off until all electric power storage devices of the aircraft have been charged sufficiently, i.e. have been charged to such an extent that the charging state of the at least one electric power storage device exceeds the predefined threshold.

In an alternative configuration, the aircraft may be configured to allow the take-off only if at least the electric power storage devices of all aircraft emergency oxygen supply devices, which are assigned to occupied seats, are sufficiently charged. In other words, it is possible that a low charging state of electric power storage devices of all aircraft emergency oxygen supply devices, which are assigned to unoccupied seats, will not prevent the aircraft from taking off.

In both configurations, the pilots may be able to manually override such an alarm signal and to take off with the aircraft, even if not all electric power storage devices are sufficiently charged. This may allow the aircraft to take off in special circumstances, in which it is not possible to sufficiently charge the electric power storage devices of all aircraft emergency oxygen supply devices.

Exemplary embodiments of the invention also include a passenger service unit comprising an aircraft emergency oxygen supply device according to an exemplary embodiment of the invention. The passenger service unit may include at least one of a reading light, a gasper, a loudspeaker, a switchable visual sign and an electric switch. The at least one electric switch may include an electric switch for switching the reading light and/or an electric switch for triggering a signal for calling cabin service personnel. The additional features, modifications and effects, as described herein with respect to the aircraft emergency oxygen supply device, apply to the passenger service unit in an analogous manner.

Exemplary embodiments of the invention further include an aircraft comprising an aircraft electric power supply system and at least one aircraft emergency oxygen supply device according to an exemplary embodiment of the invention, which is coupled to the aircraft electric power supply system. The additional features, modifications and effects, as described herein with respect to the aircraft emergency oxygen supply device, apply to the aircraft in an analogous manner.

Exemplary embodiments of the invention further include an aircraft comprising at least one a passenger service unit in accordance with an exemplary embodiment of the invention. The additional features, modifications and effects, as described herein with respect to the aircraft emergency oxygen supply device, apply to the aircraft in an analogous manner.

The aircraft may be an airplane or a helicopter.

In an embodiment, the aircraft electric power supply system is / comprises a distributed aircraft electric power supply system, which is distributed across the aircraft or at least one or more portions of the aircraft. In particular, the aircraft electric power supply system is the regular / standard power supply system, which may be used for a variety of on-board applications, such as cabin lighting, in-flight entertainment systems, passenger service unit power supply, etc. The aircraft electric power supply system is in particular not a dedicated emergency power supply system.

The aircraft electric power supply system may comprise at least one generator, which may be located at one of the engines of the aircraft, and an electric power distribution harness for distributing the electric power across the aircraft. The aircraft electric power supply system may also comprise at least one electric storage device, for example an electric battery and/or a supercapacitor, for storing and buffering the electric energy generated by the at least one generator.

In an embodiment, the aircraft comprises at least one activation sensor, which is coupled to the aircraft emergency oxygen supply device for supplying an activation signal to the aircraft emergency oxygen supply device. The at least one activation sensor may in particular be coupled to the at least one activation input terminal of the aircraft emergency oxygen supply device.

The at least one activation sensor may be an air pressure sensor, which provides an activation signal if the air pressure detected by the air pressure sensor falls below a predefined threshold. The air pressure sensor may in particular be arranged within the passenger cabin for detecting the air pressure within the passenger cabin, in order to automatically activate the aircraft emergency oxygen supply device, in case the air pressure within the passenger cabin drops below the predefined threshold.

The at least one activation pressure sensor may be integrated into the aircraft emergency oxygen supply device, in particular into the controller of the aircraft emergency oxygen supply device. The at least one activation pressure sensor also may be provided separately from the aircraft emergency oxygen supply device. One ore more or each of the at least one activation pressure sensor may in particular be configured for supplying an activation signal to a plurality of aircraft emergency oxygen supply devices.

In an embodiment, the aircraft further comprises at least one activation switch, which may be coupled to the aircraft emergency oxygen supply device for providing an activation signal to the aircraft emergency oxygen supply device. The at least one activation switch may in particular be coupled to the at least one activation input terminal of the aircraft emergency oxygen supply device. The at least one activation switch may be a manual activation switch, which is to be manually operated.

The at least one activation switch may be located in the cockpit of the aircraft for being operated by the pilots of the aircraft. Alternatively or additionally, the at least one activation switch may be located in the passenger cabin for being operated by members of the passenger cabin crew.

The at least one activation switch may be a central activation switch for simultaneously activating all or at least a plurality of aircraft emergency oxygen supply devices. Alternatively or additionally, an individual activation switch may be provided at each aircraft emergency oxygen supply device, in order to allow for individually activating the respective aircraft emergency oxygen supply device. The individual activation switch may in particular be integrated into the respective aircraft emergency oxygen supply device.

Exemplary embodiments of the invention further include a method of operating an aircraft emergency oxygen supply device according to an exemplary embodiment of the invention, which is installed in an aircraft comprising an aircraft electric power supply system, wherein method includes: charging the at least one electric power storage device of the backup electric power supply system with power supplied from the aircraft electric power supply system; and during flight of the aircraft, holding power for the operation of the aircraft emergency oxygen supply device available in the at least one electric power storage device. The additional features, modifications and effects, as described herein with respect to the aircraft emergency oxygen supply device and with respect to the aircraft having such aircraft emergency oxygen supply device, apply to the method of operating an aircraft emergency oxygen supply device in an analogous manner.

A method of operating an aircraft emergency oxygen supply device according to an exemplary embodiment of the invention may ensure that the aircraft emergency oxygen supply device may be activated and safely operated in an emergency situation, even if the regular / standard aircraft electric power supply system should fail.

In an embodiment, the charging of the at least one electric power storage device of the backup electric power supply system with power supplied from the aircraft electric power supply system takes place while the aircraft is located on the ground. In this way, it may be ensured that the at least one electric power storage device is completely or at least sufficiently charged when the aircraft takes off.

Charging of the at least one electric power storage device of the backup electric power supply system on the ground, however, does not exclude charging the at least one electric power storage device with power supplied from the aircraft electric power supply system, while the aircraft is in the air. The at least one electric power storage device may, in particular, charge the at least one electric power storage device continuously or repeatedly, while the aircraft is in the air. In this way, potential discharging of the at least one electric power storage device during flight may be compensated for, in order to keep the at least one electric power storage device fully charged or at least sufficiently charged over the complete time of flight.

In an embodiment, the method further includes, in an emergency situation, operating the aircraft emergency oxygen supply device with electric power supplied by the aircraft electric power supply system, in case the aircraft electric power supply system is working properly and sufficient electric power is supplied by the aircraft electric power supply system; and, also in an emergency situation, operating the aircraft emergency oxygen supply device using electric power supplied by the backup electric power supply system, in case the aircraft electric power supply system is not working properly so that insufficient electric power is supplied by the aircraft electric power supply system.

In an embodiment, the method includes receiving an activation signal and activating the aircraft emergency oxygen supply device, which includes in particular activating the oxygen source, upon receipt of the activation signal, for supplying oxygen to at least one passenger.

In order to avoid an unnecessary activation of the aircraft emergency oxygen supply device, the method may further include checking the occupancy of at least one seat, assigned to the aircraft emergency oxygen supply device, and activating the aircraft emergency oxygen supply device only if at least one seat, assigned to the aircraft emergency oxygen supply device, is occupied.

In an embodiment, the method includes checking the current charging state of the at least one electric power storage device and providing a status signal, which is indicative of the current charging state, to the aircraft crew, in particular to the pilot(s), and/or to an aircraft control system. This may allow for regularly monitoring and logging the current charging state of the at least one electric power storage device.

In an embodiment, the method includes issuing an alarm signal, in particular an electric, visual and/or acoustic alarm signal, in case the detected charging state of the at least one electric power storage device is below a predefined threshold.

An alarm signal provided by the backup electric power supply system may prevent the aircraft from taking-off, until all electric power storage devices of the aircraft emergency oxygen supply systems of the aircraft have been sufficiently charged, i.e. until the charging state of the at least one electric power storage device exceeds the predefined threshold.

In an alternative configuration, the aircraft may be allowed to take-off if at least the electric power storage devices of all aircraft emergency oxygen supply devices, which are assigned to occupied seats, are sufficiently charged.

In an embodiment, the pilot(s) of the aircraft may be allowed to manually override such an alarm signal and to take-off with the aircraft, although not all electric power storage devices are sufficiently charged, in order to allow the aircraft to take off in special circumstances, in which it is not possible to sufficiently charge the electric power storage devices of all aircraft emergency oxygen supply devices.

Further exemplary embodiments of the invention are described below with respect to the accompanying drawings, wherein:
Figure 1 shows a schematic side view of an aircraft, in particular an air plane, in accordance with an exemplary embodiment of the invention;
Figure 2 shows a perspective view of an aircraft emergency oxygen supply device in accordance with an exemplary embodiment of the invention, with the oxygen masks of the aircraft passenger oxygen supply module being shown in a deployed state;
Figure 3 shows a schematic view of an overhead passenger service unit (PSU) housing an aircraft emergency oxygen supply device in accordance with an exemplary embodiment of the invention;
Figure 4 shows a schematic block diagram of an aircraft emergency oxygen supply device in accordance with an exemplary embodiment of the invention.

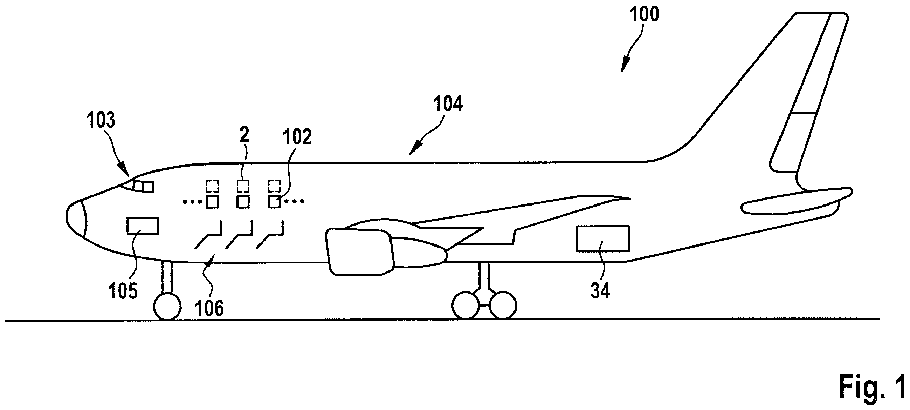

Figure 1 shows an aircraft 100, in particular an air plane, in accordance with an exemplary embodiment of the invention in a schematic side view. In the exemplary embodiment shown in Figure 1, the aircraft 100 is a large passenger air plane, comprising a cockpit 103 and a passenger cabin 104, housing a plurality of passenger seats 106. In general, the aircraft may be a commercial passenger air plane, a private air plane, a military aircraft, or a rotorcraft, such as a helicopter.

The aircraft 100 comprises an aircraft electric power supply system 34, an aircraft control system 105, which may include one or more board computers, and a plurality of aircraft emergency oxygen supply devices 2. While the aircraft electric power supply system 34 is shown as a box for ease of representation, it is understood that the aircraft electric power supply system 34 can have any suitable form and extension. In particular, the aircraft electric power supply system 34 may be a distributed power supply system that provides electric power to a wide range of electric consumers across the aircraft 100.

In an exemplary configuration, in which the aircraft 100 comprises six passenger seats 106 in every row, each row of passenger seats 106 may have two aircraft emergency oxygen supply devices 2 associated therewith, one aircraft emergency oxygen supply device 2 assigned to the passenger seats 106 on the left side of a center aisle and one aircraft emergency oxygen supply device 2 assigned to the passenger seats 106 on the right side of the center aisle.

For the exemplary embodiment of each row of passenger seats 106 having six seats, every aircraft emergency oxygen supply device 2 may include one oxygen source 20 and three oxygen masks 12, coupled to the oxygen source 20. Such a set-up is schematically illustrated in Figure 1 via three exemplary passenger windows 102, each being associated with a row of passenger seats 106, and via three exemplary aircraft emergency oxygen supply devices 2, depicted in phantom due to their arrangement within the aircraft 100.

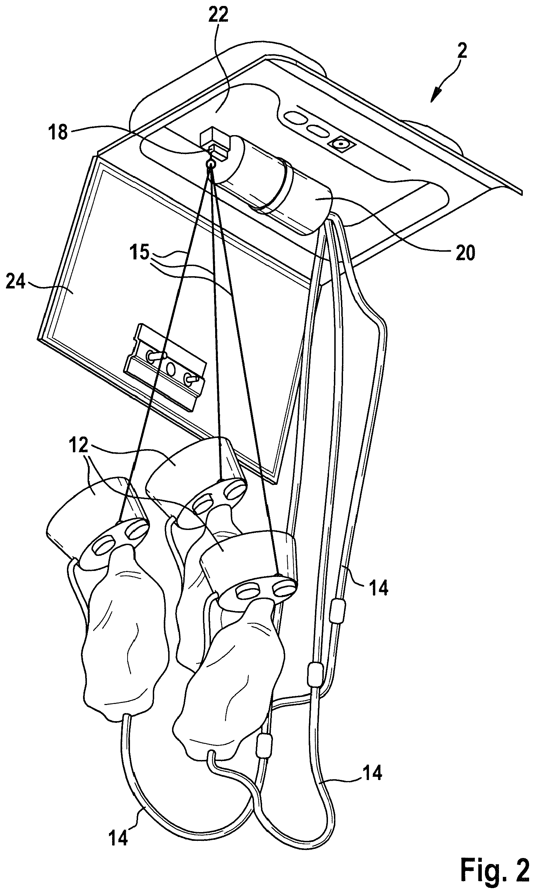

Figure 2 depicts an aircraft emergency oxygen supply device 2 in accordance with an exemplary embodiment of the invention, as it may be installed in the passenger cabin 104 of an aircraft 100. The aircraft emergency oxygen supply device 2 depicted in Figure 2 comprises an oxygen source 20 and three oxygen masks 12. Each oxygen mask 12 is fluidly coupled with the oxygen source 20 by an oxygen hose 14, allowing the oxygen source 20 to supply oxygen gas via the oxygen hose 14 to the respective oxygen mask 12. A mechanical link 15, such as a wire or a cord, extends between an activator 18 of the oxygen source 20 and every oxygen mask 12, respectively.

During normal operation of the aircraft 100, the oxygen masks 12 are stored within a compartment 22, and a movable door 24 of the aircraft emergency oxygen supply device 2 is in a closed position, in which it covers the oxygen source 20 and prevents the oxygen masks 12 from dropping out of the compartment 22.

In case of pressure loss within the passenger cabin 104, the movable door 24 opens, allowing the oxygen masks 12 to drop out of the compartment 22, so that passengers sitting below the compartment 22 may grab the oxygen masks 12. When at least one of the oxygen masks 12 is grabbed and pulled towards a passenger, the activator 18 is triggered via the mechanical link 15, also referred to as lanyard 15, extending between the respective oxygen mask 12 and the activator 18. After being triggered, the activator 18 provides a trigger input to the oxygen source 20, initiating the provision of oxygen gas by the oxygen source 20.

In exemplary embodiments of the invention, the aircraft emergency oxygen supply device 2 may have a wide range of different types of oxygen sources 20. The oxygen source may be a stand-alone unit that is able to provide oxygen by itself, i.e. without receiving oxygen from an entity outside of the aircraft emergency oxygen supply device. The oxygen source may be a pressurized oxygen container, such as a pressurized oxygen cylinder. It is also possible that the oxygen source is a chemical oxygen generator. The chemical oxygen generator may generate oxygen at the time of use via a chemical reaction. The pressurized oxygen container may have a mechanical activator / actuator / initiator or a pyroelectric activator / actuator / initiator. Similarly, the chemical oxygen generator may have a mechanical starter or a pyroelectric starter. In the following paragraphs, three different types of oxygen sources are discussed in more detail.

The oxygen source 20 may be a chemical oxygen generator 20 with a mechanical activator 18. In such a configuration, the activator 18, after being mechanically triggered via the mechanical link 15, starts a chemical reaction within the chemical oxygen generator 20. The chemical reaction produces oxygen, which is supplied to the oxygen masks 12 via the oxygen hoses 14. In an aircraft emergency oxygen supply device 2 comprising a chemical oxygen generator 20 with a mechanical activator 18, electric power is needed only for deploying the oxygen masks 12, e.g. by unlocking and/or opening the movable door 24 when the aircraft emergency oxygen supply device 2 is activated, but no electric energy is needed for starting and operating the oxygen generator 20.

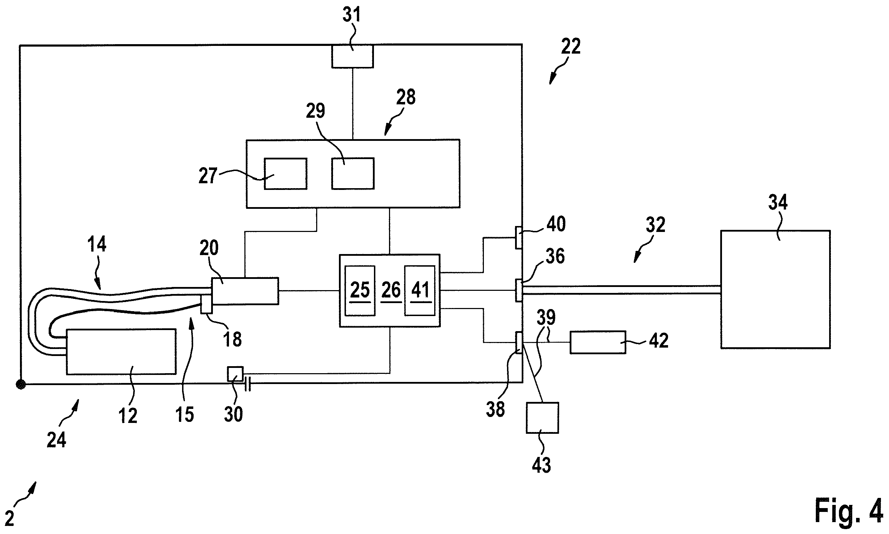

In another embodiment, the oxygen source 20 is a chemical oxygen generator 20 which is equipped with an electric activator 18. In this case, the electric activator 18 may be activated by closing an electric switch for applying an electric voltage to the electric activator 18. The electric switch may be activated via a mechanical link 15, such as the lanyard 15, as it is depicted in Figure 4. The electric switch may also be activated via an electric signal, such as a sensor signal or an activation command signal. After being electrically activated, the electric activator 18 activates a chemical reaction within the chemical oxygen generator 20. The chemical reaction produces oxygen, which is supplied to the oxygen masks 12 via the oxygen hoses 14. In an aircraft emergency oxygen supply device 2 comprising a chemical oxygen generator 20 with an electric activator 18, electric power is needed for deploying the oxygen masks 12 by unlocking and/or opening the movable door 24 and for operating the electric activator 18. No electric energy is needed for continuing the operation of the oxygen generator 20 after it has been started.

In yet another embodiment, the oxygen source 20 comprises an oxygen gas storage device, for example an oxygen gas bottle. A defined amount of a gas comprising a predefined percentage of oxygen is stored within the oxygen gas storage device. The oxygen source 20 further comprises an electric activator 18, in particular a pyroelectric activator 18, for starting the supply of oxygen gas from the oxygen gas storage device. The oxygen source 20 may also comprise a gas supply controller, which is configured for controlling the supply of the gas comprising oxygen from the oxygen storage device to the oxygen masks 12.

In such an embodiment, electric power is needed for deploying the oxygen masks 12 by unlocking and/or opening the movable door 24, for operating the (pyro)electric activator 18, and for continuously operating the gas supply controller over the full operation time of the aircraft emergency oxygen supply device 2 after the oxygen source 20 has been activated.

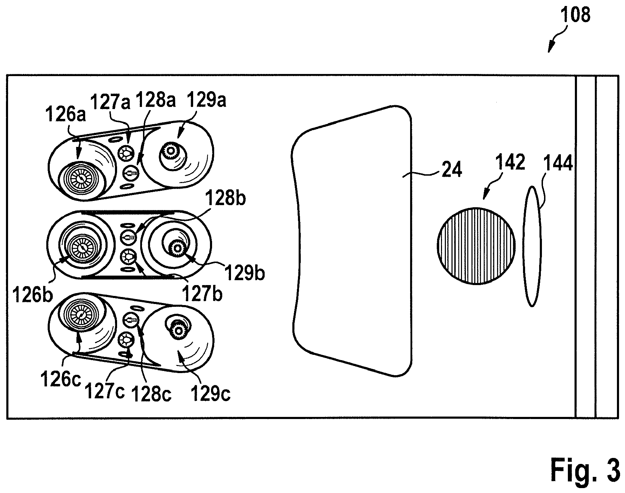

Figure 3 depicts a schematic view of an overhead passenger service unit ("PSU") 108, which may be arranged above the passenger seats 106 of a single passenger row. The overhead passenger service unit 108 may house an aircraft emergency oxygen supply device 2 in accordance with an exemplary embodiment of the invention.

Figure 3 depicts the passenger service unit 108 as it is seen from the side of a passenger sitting on a passenger seat 106 below the overhead passenger service unit 108.

On the side, which is shown to the left in Figure 3, the overhead passenger service unit 108 comprises a row of three adjustable reading lights 126a-126c, which are arranged next to each other.

Six electrical switches 127a-127c, 128a-128c are provided to the right side of the reading lights 126a-126c, a respective pair of two switches 127a-127c, 128a-128c next to each of the reading lights 126a-126c. A first one of the switches 127a-127c of each pair is configured for switching the adjacent reading light 126a-126c, and the second switch 128a-128c of each pair is configured for triggering a signal for calling cabin service personnel.

A row of three adjacent gaspers 129a-129c is provided next to the switches 127a-127c, 128a-128c.

Adjacent to the gaspers 129a-129c is a movable door 24, which covers a compartment 22, which is not visible in Figure 3, housing at least three oxygen masks 12 (not shown), similar to the configuration depicted in Figure 2.

In the event of pressure loss within the passenger cabin 104, the movable door 24 will open, allowing the oxygen masks 12 to drop out of the compartment 22, and each of the passengers sitting below the overhead passenger service unit 108 may grasp one of the oxygen masks 12. After being activated, an oxygen source 20 will supply the oxygen masks 12 with oxygen, as it has been described before with reference to Figure 2.

On the side opposite to the gaspers 129a-129c, a grid 142 is formed within overhead passenger service unit 108. A loudspeaker (not shown), which may be used for delivering acoustic announcements to the passengers, may be arranged behind said grid 142.

Next to the grid 142, there is a display panel 144, which may be configured for selectively showing a plurality of visual signs (not shown), such as "non smoking" or "fasten you seat belt". The display panel 144 may be illuminated from behind, in order to deliver visual information to the passengers sitting below the overhead passenger service unit 108.

The passenger service unit 108 may be coupled to the aircraft electric power supply system as a whole, with the distribution of electric power among above described components taking place within the passenger service unit 108. It is also possible that individual ones or all of above described components of the passenger service unit 108 are coupled to the aircraft electric power supply system separately.

Figure 4 shows a schematic block diagram of an aircraft emergency oxygen supply device 2 in accordance with an exemplary embodiment of the invention.

For simplicity of the illustration, Figure 4 shows only a single oxygen mask 12, which is fluidly coupled to an oxygen source 20 by means of an oxygen hose 14, as depicted in Figure 2. A mechanical link 15, which may be a wire or a cord, extends between the oxygen mask 12 and the activator 18, which is provided at the oxygen source 20.

The skilled person understands that an aircraft emergency oxygen supply device 2, as it is depicted in Figure 4, may comprise more than one oxygen mask 12. A plurality of oxygen masks 12 may be fluidly coupled to a common oxygen source 20. Alternatively, the aircraft emergency oxygen supply device 2 may comprise a plurality of oxygen sources 20. In particular, the aircraft emergency oxygen supply device 2 may comprise a separate oxygen source 20 for each oxygen mask 12.

The aircraft emergency oxygen supply device 2 further comprises a controller 26, which is configured for controlling the operation of the aircraft emergency oxygen supply device 2. The controller 26 is in particular configured for controlling an actuator 30, which is provided for unlocking and/or opening the movable door 24 of the aircraft emergency oxygen supply device 2, in order to provide passengers with access to the at least one oxygen mask 12 of the aircraft emergency oxygen supply device 2, as it is depicted in Figure 2.

If the oxygen source 20 comprises an electric activator 18, i.e. an activator which is electrically operated, as it has been described before, the controller may be further configured for controlling, in particular for triggering, the electric activator 18.

In a configuration in which the oxygen source 20 comprises a gas storage device, such as a gas bottle, the controller 26 may further provide the functionality of a gas supply controller 25 for controlling the supply of the gas comprising oxygen from the oxygen storage device to the oxygen masks 12. Alternatively, the gas supply controller may be provided separately from the controller 26. In such a configuration the gas supply controller is coupled with the controller 26 for being triggered and/or controlled by the controller 26.

The aircraft emergency oxygen supply device 2 comprises a power input terminal 36, and at least one activation input terminal 38. The power input terminal 36 and the at least one activation input terminal 38 are electrically coupled with the controller 26.

When the aircraft emergency oxygen supply device 2 is installed within an aircraft 100, electric power supply lines 32 are electrically coupled with the power input terminal 36 for supplying electric power from the aircraft electric power supply system 34 to the aircraft emergency oxygen supply device 2. The aircraft electric power supply system 34 may be configured for supplying electric DC power, having a voltage in the range of between 15 V and 35 V, in particular a voltage in the range of between 20 and 30 V, more particularly having a voltage in the range of between 27.5 and 28.5 V.

The aircraft emergency oxygen supply device 2, in particular the controller 26 thereof, is configured for receiving an activation signal for activating the aircraft emergency oxygen supply device 2.

In an exemplary embodiment, the aircraft emergency oxygen supply device 2 may comprise an air pressure sensor 41. The air pressure sensor 41 may be configured for detecting the pressure of air within a passenger cabin 104 and for supplying an activation signal in case the pressure of air detected by the air pressure sensor 41 is below a predefined threshold. A configuration comprising a pressure sensor 41 may allow for automatically activating the aircraft emergency oxygen supply device 2, in case the pressure of air within the passenger cabin 104 drops below a predefined threshold causing an emergency situation.

Additionally or alternatively, an air pressure sensor 41 may be provided outside and/or separately from the aircraft emergency oxygen supply device 2. In such a configuration, the air pressure sensor 41 may be coupled to the controller 26 via the at least one activation input terminal 38.

Additionally or alternatively, a manual activation switch 42 may be electrically coupled to the at least one activation input terminal 38, in order to allow for activating the aircraft emergency oxygen supply device 2 by operating the manual activation switch 42. A manual activation switch 42 may be located within the passenger cabin 104 for being operated by members of the passenger cabin crew. Alternatively or additionally, a manual activation switch 42 may be provided within the cockpit 103 of the aircraft 100 for being operated by the pilot(s).

As a further option, a seat occupancy sensor 43 may be coupled to the at least one activation input terminal 38. In a configuration including a seat occupancy sensor 43, the controller 26 may be configured for activating the aircraft emergency oxygen supply device 2 only if at least one passenger seat 106, which is associated with the aircraft emergency oxygen supply device 2, is occupied by a passenger.

The pressure sensor 41, the at least one manual activation switch 42, and/or the seat occupancy sensor 43 may by coupled to the at least one activation input terminal 38 by electric signal lines providing a wired connection 39 for transmitting the activation signal.

Alternatively or additionally to a wired connection, the pressure sensor 41, the at least one manual activation switch 42, and/or the seat occupancy sensor 43 may by coupled to the at least one activation input terminal 38 by means of a wireless connection, for example by a wireless connection, which is implemented using WLAN, Bluetooth^{®}, infrared data transmission, or a similar technology which is suitable for wireless data transmission.

The aircraft emergency oxygen supply device 2 further comprises a backup electric power supply system 28. The backup electric power supply system 28 includes at least one electric power storage device 29. The electric power storage device 29 is a rechargeable electric power storage device, for example an electric rechargeable battery or a capacitor or a supercapacitor or another suitable rechargeable electric power storage device. The backup electric power supply system 28 is configured for supplying electric power for operating the aircraft emergency oxygen supply device 2 in emergency situations, in which no or not enough electric power for operating the aircraft emergency oxygen supply device 2 is supplied by the aircraft electric power supply system 34. In consequence, the backup electric power supply system 28 allows the aircraft emergency oxygen supply device 2 to operate reliably, even in case of a malfunction or a breakdown of the aircraft electric power supply system 34.

The electric capacity of the backup electric power supply system 28, in particular the electric capacity of the at least one electric power storage device 29, depends on the amount of electric energy which is needed for reliably operating the aircraft emergency oxygen supply device 2 in case of a malfunction or a breakdown of the aircraft electric power supply system 34.

As it has been described before, electric power is always needed for unlocking and/or opening the movable door 24 of the compartment 22. Thus, the backup electric power supply system 28 is configured such that it is capable to provide sufficient electric power for deploying the oxygen masks 12 by unlocking and/or opening the movable door 24 of the compartment 22.

In case the aircraft emergency oxygen supply device 2 is equipped with a (pyro)electric activator for starting the production and/or the supply of oxygen comprising gas, the backup electric power supply system 28 is configured such that it is additionally capable to provide sufficient electric power for reliably operating the electric activator in order to reliably start the production and/or the supply of oxygen comprising gas, which is to be delivered to the oxygen masks 12.

In case the aircraft emergency oxygen supply device 2 further comprises a gas supply controller 25 for controlling the supply of gas to the oxygen masks 12, the backup electric power supply system 28 is configured such that it is additionally capable to provide sufficient electric power for reliably operating the gas supply controller 25.

In this case, the backup electric power supply system 28 is configured such that it is capable to provide sufficient electric power for reliably operating the aircraft emergency oxygen supply device 2 not only over the relatively short starting phase in which the oxygen source 20 is activated, but over its full operating time, i.e. over the whole period of time in which the oxygen source 20 is supplying oxygen gas to the oxygen masks 12.

Thus, the electric capacity of the backup electric power supply system 28, which is defined by the electric capacity of the at least one electric power storage device 29, may be larger if the electric energy stored within the at least one electric power storage device 29 is needed not only for deploying the oxygen masks 12, but also for operating an electric activator 17. The electric capacity of the backup electric power supply system 28 may be even larger if additional electric energy is needed for operating a gas supply controller 25 of the aircraft emergency oxygen supply device 2, which controls the supply of oxygen gas to the oxygen masks 12.

The at least one electric power storage device 29 of the backup electric power supply system 28 is directly chargeable with electric power provided by the aircraft electric power supply system 34. In particular, in an aircraft emergency oxygen supply device 2 according to an exemplary embodiment of the invention, no energy harvesting device, which is configured for transferring optical or mechanical energy into electric power, is employed for providing the electric power used for charging the at least one electric power storage device 29.

Thus, in situations in which the aircraft electric power supply system 34 is properly operating, so that it supplies sufficient electric power to the aircraft emergency oxygen supply device 2, the controller 26 and/or the backup electric power supply system 28 may supply electric power, which is supplied from the aircraft electric power supply system 34 via the electric power supply lines 32, to the at least one electric power storage device 29 for charging the at least one electric power storage device 29.

The at least one electric power storage device 29 may for example be charged every time the aircraft electric power supply system 34 is activated, in particular every time before the aircraft 100 takes off.

The at least one electric power storage device 29 may also be charged during the flight, as long as the aircraft electric power supply system 34 is working properly.

The at least one electric power storage device 29 may in particular be charged sufficiently for maintaining a fully charged state of the at least one electric power storage device 29 over the complete flight.

In an embodiment, the aircraft emergency oxygen supply device 2 further comprises an electric charge sensor 27. The electric charge sensor 27 is electrically coupled with the at least one electric power storage device 29 for determining a current charging state of the at least one electric power storage device 29.

The aircraft emergency oxygen supply device 2 may also comprise at least one charge indicator device 31, which is configured for indicating the current charging state of the at least one electric power storage device 29.

The at least one charge indicator device 31 may, for example, be an optical charge indicator device 31, which provides an optical signal indicating the current charging state of at least one electric power storage device 29, electrically coupled with the charge indicator device 31. For indicating the current charging state of at least one electric power storage device 29, the optical charge indicator device 31 may, for example, include a plurality of LEDs of different colors, which are activated and deactivated depending on the current charging state of the at least one electric power storage device 29.

Alternatively, the optical charge indicator device 31 may comprise a single LED, which is configured for emitting light of different colors as a function of the current charging state of the at least one electric power storage device 29.

Other types of optical charge indicator devices 31 may be employed as well.

Charge indicator devices 31, provided at the aircraft emergency oxygen supply devices 2, may allow members of the cabin crew to conveniently and reliably check the current charging states of the electric power storage devices 29 of all aircraft emergency oxygen supply devices 2. The charging states may in particular be checked, before the aircraft 100 takes off. The take-off of the aircraft 100 may be delayed, until the charging states of the electric power storage devices 29 of all aircraft emergency oxygen supply devices 2 have reached a predefined minimum threshold.

Charge indicator devices 31 may further allow for detecting and reporting an unusual fast discharging of an electric power storage device 29, which may indicate a low capacity and/or a malfunction of an electric power storage device 29. Detecting a low capacity and/or a malfunction of an electric power storage device 29 may result in a replacement of said electric power storage device 29.

The backup electric power supply system 28 may also be configured for providing a status signal at a status signal output terminal 40 of the aircraft emergency oxygen supply device 2. The status signal, which is indicative of the current charging state of the at least one electric power storage device 29, may be an electric, a visual and/or an acoustic status signal. An electric status signal may be forwarded to the aircraft control system 105, which may include a data logging system for logging operational parameters of the aircraft 100.

The backup electric power supply system 28 and/or the aircraft control system 105 may in particular be configured for issuing an alarm signal, in particular an electric, visual and/or acoustic alarm signal, in case the detected charging state of the at least one electric power storage device 29 is below a predefined threshold. The aircraft control system 105 may in particular be configured such that the detection of an alarm signal prevents the aircraft 100 from taking-off, until all electric power storage devices 29 of the aircraft 100 have been charged sufficiently, so that the charging state of the at least one electric power storage device 29 exceeds the predefined threshold.

The aircraft 100 may be configured such that it is allowed to take off only if at least the electric power storage devices 29 of all aircraft emergency oxygen supply devices 2, which are assigned to occupied seats, are sufficiently charged.

The pilots may be able to manually override an alarm signal and to take off with the aircraft 100, although not all electric power storage devices 29 are sufficiently charged, in order to allow the aircraft 100 to take off under special circumstances, in which it is necessary or desirable to take off although not all of the electric power storage devices 29 are sufficiently charged.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed, but that the invention will include all embodiments falling within the scope of the appended claims.

## Claims

1. Aircraft emergency oxygen supply device (2), comprising:
an oxygen source (20) for supplying oxygen gas;
a backup electric power supply system (28), comprising at least one electric power storage device (29); and
a controller (26) for controlling the operation of the aircraft emergency oxygen supply device (2);
wherein the aircraft emergency oxygen supply device (2) is electrically connectable to an aircraft electric power supply system (34) for being supplied with electric power provided by the aircraft electric power supply system (34);
wherein the at least one electric power storage device (29) is chargeable by electric power provided by the aircraft electric power supply system (34); and
wherein the aircraft emergency oxygen supply device (2) is operational with electric power provided by the backup electric power supply system (28).

2. Aircraft emergency oxygen supply device (2) according to claim 1, wherein the aircraft emergency oxygen supply device (2) is operational with electric DC power having a voltage in the range of between 15 V and 35 V, in particular a voltage in the range of between 20 and 30 V, more in particular having a voltage in the range of between 27.5 and 28.5 V.

3. Aircraft emergency oxygen supply device (2) according to claim 1 or 2,
wherein the aircraft emergency oxygen supply device (2) has a power supply input terminal (36) for receiving electric power from the aircraft electric power supply system (34); and
wherein the aircraft emergency oxygen supply device (2) has at least one activation input terminal (38) for receiving an activation signal activating the aircraft emergency oxygen supply device (2);
wherein the activation input terminal (38) is in particular provided separately and independently from the power supply input terminal (36).

4. Aircraft emergency oxygen supply device (2) according to claim 3, wherein the activation input terminal (38) is configured for receiving the activation signal via a wired connection (39) and/or via a wireless connection.

5. Aircraft emergency oxygen supply device (2) according to any of the preceding claims, further comprising an electric charge sensor (27) for determining a current charging state of the at least one electric power storage device (29), wherein the aircraft emergency oxygen supply device (2) comprises in particular a charge indicator device (31) for indicating the current charging state of the at least one electric power storage device (29).

6. Aircraft emergency oxygen supply device (2) according to claim 5,
wherein the backup electric power supply system (28) is configured for issuing a status signal, in particular an electric, visual and/or acoustic status signal, indicative of the current charging state of the at least one electric power storage device (29), and/or
wherein the backup electric power supply system (28) is configured for issuing an alarm signal, in particular an electric, visual and/or acoustic alarm signal, in case the current charging state of the at least one electric power storage device (29) is below a predefined threshold.

7. Aircraft emergency oxygen supply device (2) according to any of the preceding claims,
wherein the oxygen source (20) comprises a chemical oxygen generator (20) with a mechanical activator (18), wherein the mechanical activator (18) is configured for starting a chemical reaction within the chemical oxygen generator (20) after it has been mechanically triggered, wherein the at least one electric power storage device in particular has an electric storage capacity sufficient to effect deployment of at least one oxygen mask (12); or
wherein the oxygen source (20) comprises a chemical oxygen generator (20) with an electric activator (18), in particular a pyroelectric actuator, wherein the electric activator (18) is configured for starting a chemical reaction within the chemical oxygen generator (20) after it has been electrically triggered, wherein the at least one electric power storage device in particular has an electric storage capacity sufficient to effect deployment of at least one oxygen mask (12) and to operate the electric activator (18); or
wherein the oxygen source (20) comprises an oxygen gas storage device, in particular an oxygen gas bottle, in which a predefined amount of oxygen gas is stored; an electric activator (18), in particular a pyroelectric activator, for starting the supply of oxygen gas from the oxygen gas storage device; and a gas supply controller (25) for controlling the supply of oxygen gas from the oxygen storage device to at least one oxygen mask (12); wherein the at least one electric power storage device in particular has an electric storage capacity sufficient to effect deployment of the at least one oxygen mask, to operate the electric activator (18), and to operate the gas supply controller (25).

8. Aircraft emergency oxygen supply device (2) according to any of the preceding claims, further comprising at least one activation sensor (41), in particular at least one air pressure sensor (41), for providing an activation signal activating the aircraft emergency oxygen supply device (2), wherein the at least one activation sensor (41) in particular is coupled to and/or arranged within the controller (26).

9. Passenger service unit, comprising an aircraft emergency oxygen supply device (2) according to any of the preceding claims and at least one of a reading light (126a-126c), a gasper (129a-129c), a loudspeaker, a switchable visual sign (144) and an electric switch (127a-127c, 128a-128c) for switching the at least one reading light (126a-126c) and/or for triggering a signal for calling cabin service personnel.

10. Aircraft (100), in particular an airplane or a helicopter, comprising:
an aircraft electric power supply system (34); and
at least one aircraft emergency oxygen supply device (2) according to any of the preceding claims, which is coupled to the aircraft electric power supply system (34).

11. Aircraft according to claim 10, further comprising at least one activation switch, in particular a manual activation switch (42), which is coupled to the aircraft emergency oxygen supply device (2) for selectively providing an activation signal to the aircraft emergency oxygen supply device (2).

12. Method of operating an aircraft emergency oxygen supply device (2) according to any of claims 1 to 8, which is installed in an aircraft (100) comprising an aircraft electric power supply system (34), wherein the method includes:
charging the at least one electric power storage device (29) of the backup electric power supply system (28) with power supplied from the aircraft electric power supply system (34); and
during flight of the aircraft (100), holding power for the operation of the aircraft emergency oxygen supply device (2) available in the at least one electric power storage device (29).

13. Method according to claim 12, wherein the method further includes:
in an emergency situation, operating the aircraft emergency oxygen supply device (2) with electric power supplied by the aircraft electric power supply system (34), in case sufficient electric power is supplied by the aircraft electric power supply system (34); and
in an emergency situation, operating the aircraft emergency oxygen supply device (2) using electric power supplied by the backup electric power supply system (28), in case sufficient electric power is not supplied by the aircraft electric power supply system (34).

14. Method according to any of claims 12 or 13,
wherein the method includes receiving an activation signal and activating the aircraft emergency oxygen supply device (2) upon receipt of said activation signal; and/or
wherein the method includes checking the current charging state of the at least one electric power storage device (29) and providing a status signal, indicative of the current charging state, to the aircraft crew and/or to an aircraft control system (105).

15. Method according to any of claims 12 or 14, wherein said charging of the at least one electric power storage device (29) of the backup electric power supply system (28) with power supplied from the aircraft electric power supply system (34) takes place when the aircraft (100) is on the ground.
